# NEUE EUROPÄISCHE PATENTSCHRIFT

(11) **EP 3 710 340 B2**
(45) Veröffentlichungstag und Bekanntmachung des Hinweises auf die Entscheidung über den Einspruch: **16.07.2025**
(45) Hinweis auf die Patenterteilung: 29.06.2022
(21) Anmeldenummer: 18796960.5
(22) Anmeldetag: 09.11.2018
(51) Int. Cl.: B62D 25/00, B62D 29/00

(54) **SYSTEM EINES VERSTÄRKTEN STRUKTURELEMENTS**
SYSTEM OF A REINFORCED STRUCTURAL ELEMENT
SYSTEME D'UN ELEMENT STRUCTURAL RENFORCE

(30) Priorität: 15.11.2017 EP 17201948
(43) Veröffentlichungstag der Anmeldung: 23.09.2020
(73) Patentinhaber: Sika Technology AG, 6340 Baar (CH)
(72) Erfinder: BELPAIRE, Vincent, 1180 Uccle (BE); SHEHU, Ardi, 3111 Rotselaar (BE)
(74) Vertreter: Sika Patent Attorneys
(86) Internationale Anmeldenummer: PCT/EP2018/080781
(87) Internationale Veröffentlichungsnummer: WO 2019/096694

(56) Entgegenhaltungen:
- EP-A1- 2 154 052
- DE-A1- 102011 117 951
- GB-A- 2 375 328
- US-A1- 2016 016 609
- US-A1- 2017 036 701

## Beschreibung

Die vorliegende Erfindung betrifft ein System eines verstärkten Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken. Solche Verstärkungselemente sind von GB 2 375 328 und DE 10 2011 117951 A1 bekannt.

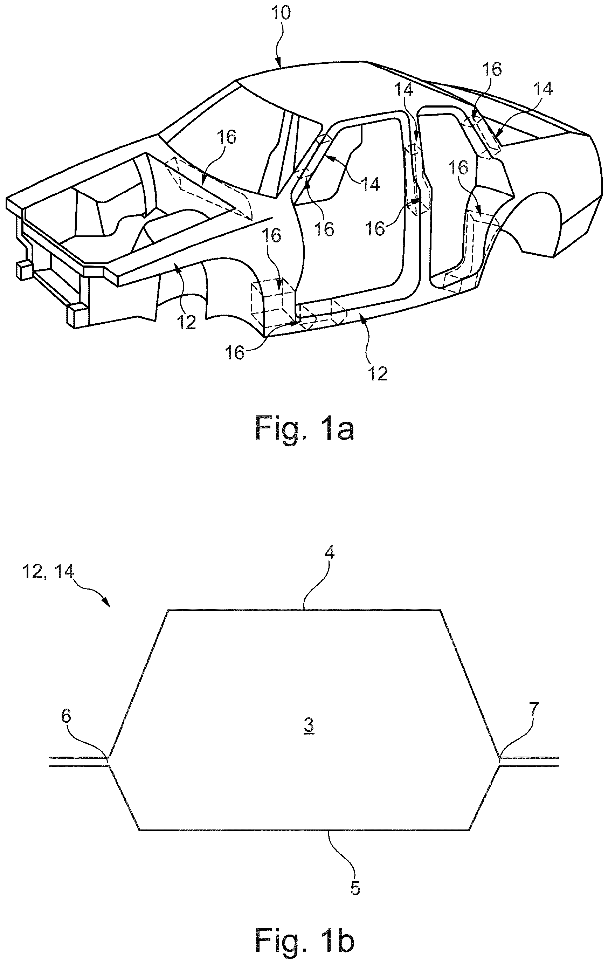

In Fig. 1a ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

In Fig. 1b ist schematisch ein Querschnitt durch ein Strukturelement 12, 14 dargestellt. Oftmals sind bei solchen Strukturelementen 12, 14 ein erstes Blech 4 und ein zweites Blech 5 an Fügestellen 6, 7 zusammengefügt, wobei die Bleche 4, 5 zwischen den Fügestellen 6, 7 einen Hohlraum 3 ausbilden.

Zur Verstärkung solcher Strukturelemente 12, 14 mit Hohlräumen 3 wurden bereits verschiedene Ansätze vorgeschlagen. Es ist weiterhin erstrebenswert, solche Strukturelemente 12, 14 mit möglichst leichten Verstärkungselementen 16 zu verstärken.

Der Erfindung liegt daher die Aufgabe zugrunde, ein verbessertes System eines verstärkten Strukturelementes eines Kraftfahrzeuges zur Verfügung zu stellen. Dabei sollen insbesondere Anforderungen, wie sie bei Bauteilen mit besonders hohen Lastfällen auftreten, besser erfüllt werden können.

Diese Aufgabe wird gelöst durch ein System eines verstärkten Strukturelementes in einem Kraftfahrzeug nach Ansptuch 1.

Diese Lösung hat den Vorteil, dass dadurch Vorrichtungen zur Verstärkung eines Strukturelementes zur Verfügung gestellt werden können, welche eine verbesserte Anbindung des Verstärkungselementes am Strukturelement ermöglichen. Durch die konvergierenden Wände, welche an die offene Seite angrenzen, steht grundsätzlich mehr Oberfläche des Verstärkungselementes zur Anbindung an das Strukturelement zur Verfügung.

Ein Kerngedanke der vorliegenden Erfindung ist es, ein Verstärkungselement bereitzustellen, welches durch einen geeigneten Querschnitt verbesserte mechanische Eigenschaften aufweist, eine grössere Anbindungsfläche zur Verklebung mit dem Strukturelement aufweist und insgesamt eine verbesserte Verstärkung des Strukturelementes ermöglicht. Es hat sich dabei gezeigt, dass Verstärkungselemente, welche konvergierende Wände aufweisen, diesen Anforderungen eher gerecht werden als Verstärkungselemente mit nicht-konvergierenden Wänden.

In einer beispielhaften Ausführungsform hat das Verstärkungselement eine erste Seitenwand und eine zweite Seitenwand und eine die Seitenwände verbindende Verbindungswand.

In einer beispielhaften Ausführungsform umfasst die erste Seitenwand eine erste Teilwand und eine zweite Teilwand, wobei die Teilwände nicht in derselben Ebene liegen.

In einer beispielhaften Ausführungsform umfasst die zweite Seitenwand eine erste Teilwand und eine zweite Teilwand, wobei die Teilwände nicht in derselben Ebene liegen.

Das Vorsehen von Teilwänden, welche nicht in derselben Ebene liegen, hat den Vorteil, dass dadurch Seitenwände besser an die Geometrie des Strukturelementes angepasst werden können. Insbesondere im Bereich von Fügestellen, an welchen die Bleche des Strukturelementes gefügt sind, ist es von Vorteil, Seitenwände vorzusehen, welche den Geometrien des Strukturelementes folgen. Dies ist mit Teilwänden besser möglich als mit geraden Wänden, welche in nur einer Ebene liegen.

In einer beispielhaften Ausführungsform ist die Verbindungswand derart angeordnet, dass sich die Seitenwände auf derselben Seite der Verbindungswand erstrecken.

In einer alternativen Ausführungsform ist die Verbindungswand derart angeordnet, dass sich die Seitenwände auf unterschiedlichen Seiten der Verbindungswand erstrecken.

In einer beispielhaften Ausführungsform beträgt ein Winkel, welcher die konvergierenden Verlängerungen der angrenzenden Wände bilden, zwischen 0° und 180°, oder zwischen 0° und 150°, oder zwischen 0° und 120°, oder zwischen 0° und 90°, oder zwischen 0° und 60°.

In einer beispielhaften Ausführungsform umfasst das Verstärkungselement Rippen, welche im Wesentlichen orthogonal zur Längsachse des Verstärkungselementes orientiert sind und welche die erste Seitenwand und die zweite Seitenwand miteinander verbinden.

Solche Rippen bieten den Vorteil, dass eine mechanische Belastbarkeit des Verstärkungselementes an sich dadurch verbessert werden kann.

In einer beispielhaften Ausführungsform sind die Wände aus demselben Material gebildet.

In einer beispielhaften Ausführungsform enthält das Verstärkungselement Metall, Stahl, Aluminium, Magnesium, Kunststoff, faserverstärkten Kunststoff, Organo Sheet oder eine Kombination dieser Materialien.

Das System umfasst: ein Strukturelement; ein Verstärkungselement, wobei das Verstärkungselement im Strukturelement angeordnet ist; und einen Klebstoff, wobei der Klebstoff das Verstärkungselement und das Strukturelement miteinander verbindet. Dabei ist das Verstärkungselement gemäss obiger Beschreibung ausgebildet.

In einer beispielhaften Ausführungsform hat der Klebstoff eine Expansionsrate von weniger als 500% oder weniger als 400% oder weniger als 300%, oder ist der Klebstoff ein nicht expandierbarer Klebstoff.

Wenig expandierbare oder nicht expandierbare Materialien bieten den Vorteil, dass dadurch der Klebstoff bei der Expansion nicht zu sehr an mechanischer Stabilität verliert. Grundsätzlich wird ein Material mechanisch schwächer, je stärker das Material expandiert wird.

Beispiele für nicht oder wenig expandierbare Klebstoffe sind insbesondere SikaReinforcer<^{®}>-940 oder SikaPower<^{®}>-497. Dabei ist SikaReinforcer<^{®}>-940 ein Beispiel für ein expandierbares Material, wobei SikaPower<^{®}>-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10% verändert bei den für das Material vorgesehenen Prozessschritten. Beispielsweise können nicht expandierbare Klebstoffe bei einer Aushärtung leicht schrumpfen. Eine solche Volumenveränderung bei einem Aushärten wird im Sinne dieser Anmeldung als "nicht expandierbar" betrachtet.

In einer beispielhaften Ausführungsform ist der Klebstoff durch eine Temperatur von mehr als 120° härtbar.

In einer weiteren alternativen Ausführungsform umfasst das System einen ersten Klebstoff und einen zweiten Klebstoff, wobei die Klebstoffe unterschiedliche Eigenschaften, insbesondere hinsichtlich einer Expansion und/oder einer Aushärtung und/oder einer Anbindungsfähigkeit und/oder einer mechanischen Belastbarkeit, haben.

In einer beispielhaften Ausführungsform ist der Klebstoff ein Klebebandklebstoff, ein Formgedächtnisklebstoff, ein einspritzbarer Klebstoff, ein spritzgegossener Klebstoff oder ein aufextrudierter Klebstoff.

In einer beispielhaften Ausführungsform verbindet der Klebstoff zumindest die erste Seitenwand und die zweite Seitenwand mit dem Strukturelement.

In einer beispielhaften Ausführungsform verbindet der Klebstoff die Verbindungswand mit dem Strukturelement.

In einer beispielhaften Ausführungsform bildet der Klebstoff in einem Bereich einer ersten Fügestelle und/oder in einem Bereich einer zweiten Fügestelle des Strukturelementes eine kontinuierliche Schicht, so dass das Verstärkungselement in diesem Bereich sowohl mit einem ersten Blech als auch mit einem zweiten Blech verbunden ist.

Dies ist deshalb von Vorteil, weil durch eine Verstärkung des Strukturelementes in den Bereichen der Fügestellen durch das Verstärkungselement eine Verbesserung der Verstärkung des Gesamtsystems erzielbar ist.

In einer beispielhaften Ausführungsform sind in einem Querschnitt des Strukturelementes zumindest 50%, oder zumindest 60%, oder zumindest 70% eines inneren Umfanges des Strukturelementes, gebildet aus dem ersten Blech und dem zweiten Blech, durch den Klebstoff mit dem Verstärkungselement verbunden.

Es hat sich gezeigt, dass eine möglichst grosse Verbindungsfläche zwischen Verstärkungselement und Strukturelement von Vorteil ist, um das Gesamtsystem bezüglich einer mechanischen Belastbarkeit zu verbessern.

Das hier vorgeschlagene Verstärkungselement ist erfindungsgemäß durch ein dreidimensionales Druckverfahren hergestellt.

Einzelheiten und Vorteile der Erfindung werden im Folgenden anhand von Ausführungsbeispielen und mit Bezug auf schematische Zeichnungen beschrieben.

Es zeigen:
Fig. 1a : schematische Darstellung einer Karosserie;
Fig. 1b : schematische Darstellung eines Querschnittes durch ein Strukturelement;
Fig. 2a und 2b : schematische Darstellung eines Verstärkungselementes; und
Fig. 3a bis 4d : schematische Darstellung eines Systems eines verstärkten Strukturelementes.

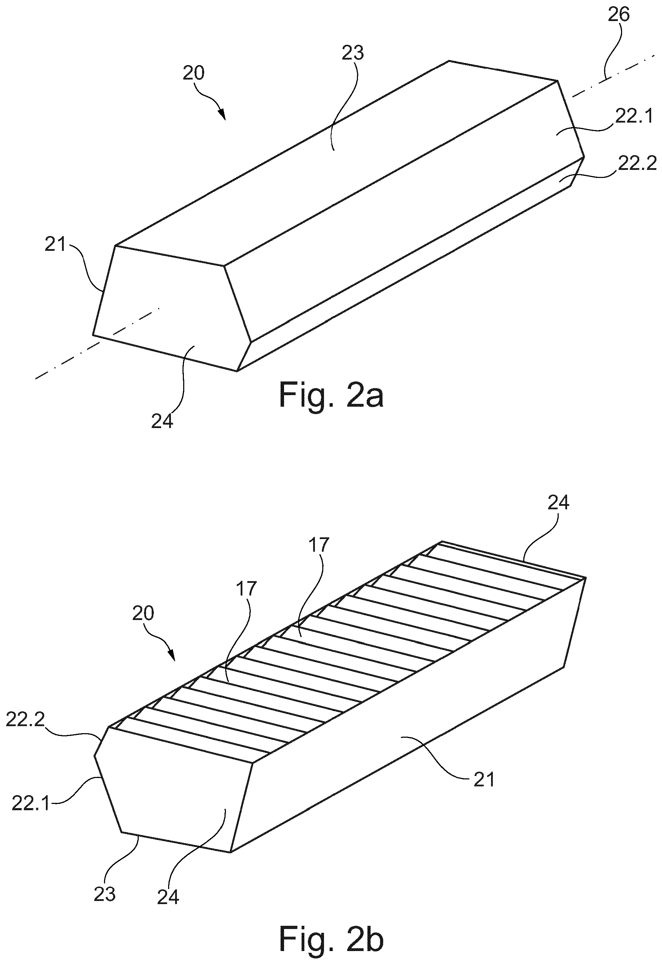

In den Fig. 2a und 2b ist ein beispielhaftes Verstärkungselement 20 räumlich dargestellt. Das Verstärkungselement 20 hat dabei eine Längsachse 26 und Wände 21, 22, 23, welche sich in Richtung der Längsachse 26 erstrecken. Dabei ist eine erste Seitenwand 21, eine Verbindungswand 23 und eine zweite Seitenwand 22 nebeneinander angeordnet. Die zweite Seitenwand 22 ist in diesem Ausführungsbeispiel in eine erste Teilwand 22.1 und eine zweite Teilwand 22.2 aufgeteilt. Das Verstärkungselement 20 hat eine offene Seite, welche sich in diesem Ausführungsbeispiel zwischen der ersten Seitenwand 21 und der zweiten Teilwand 22.2 der zweiten Seitenwand 22 befindet. Zudem hat das Verstärkungselement 20 eine Vorder- und Rückwand 24. Weiterhin umfasst das Verstärkungselement 20 Rippen 17, welche in diesem Ausführungsbeispiel parallel zur Vorder- bzw. Rückwand 24 angeordnet sind. Die Rippen 17 verbinden in diesem Ausführungsbeispiel alle entlang der Längsachse 26 ausgerichteten Wände 21, 22, 23 miteinander.

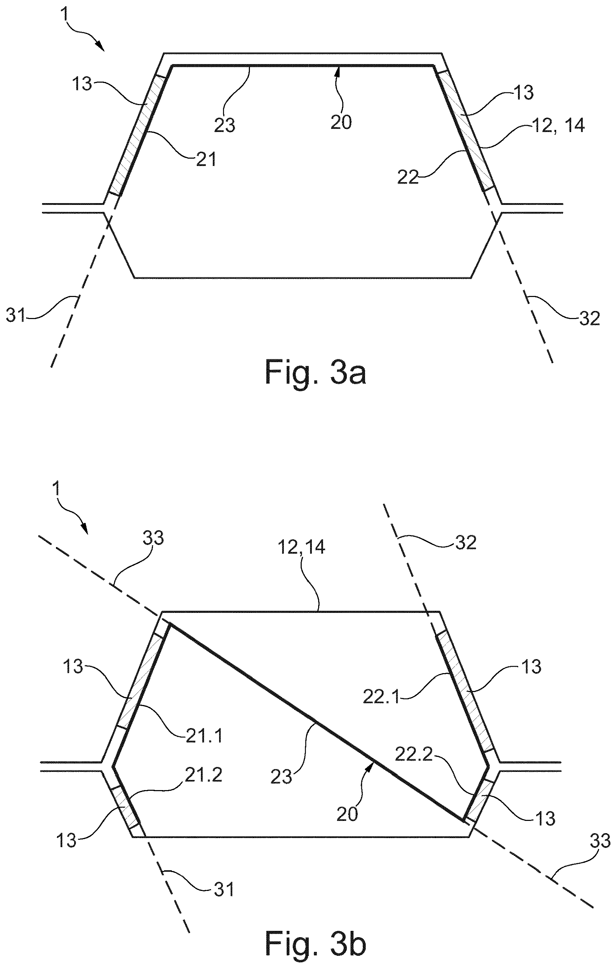

In den Fig. 3a bis 4b sind verschiedene Querschnitte durch ein System 1 eines verstärkten Strukturelementes 12, 14 dargestellt. Dabei ist jeweils ein Verstärkungselement 20 in einem Hohlraum 3 des Strukturelementes 12, 14 angeordnet. Das Verstärkungselement 20 ist dabei durch Klebstoff 13 mit dem Strukturelement 12, 14 verbunden.

In den Fig. 3a und 3b sind zwei unterschiedliche Ausführungsbeispiele dargestellt, in welchen die direkt an die offene Seite angrenzenden Wände 21, 22 nicht-konvergierend ausgebildet sind. Dies ist insbesondere daran ersichtlich, dass die Verlängerung 31der ersten Seitenwand 21, die Verlängerung 32 der zweiten Seitenwand 22 und die Verlängerung 33 der Verbindungswand 23, welche jeweils in Richtung der offenen Seite senkrecht zur Längsachse des Verstärkungselementes 20 verlaufen, sich nicht kreuzen.

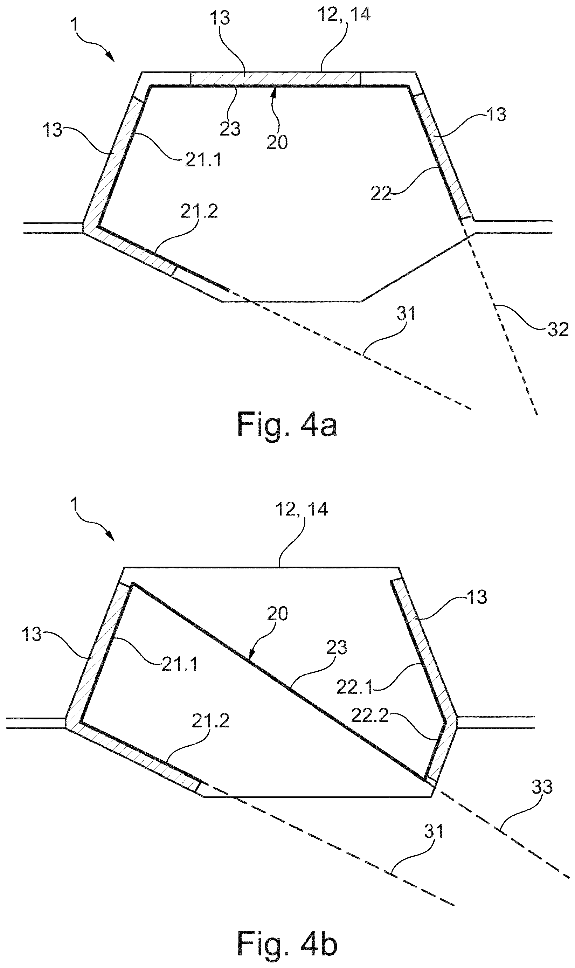

In den Fig. 4a bis 4d sind hingegen vier verschiedene Ausführungsbeispiele schematisch dargestellt, in welchen sich die Verlängerungen 31, 32, 33 der angrenzenden Seitenwände 21, 22, 23 kreuzen. In diesen Ausführungsbeispielen sind demnach die an die direkt offene Seite angrenzenden Wände 21, 22, 23 konvergierend ausgebildet.

In Fig. 4a grenzt die erste Teilwand 21.2 der ersten Seitenwand 21 und die zweite Seitenwand 22 direkt an die offene Seite an. Die Verlängerung 31 der ersten Seitenwand 21 und die Verlängerung 32 der zweiten Seitenwand 22 kreuzen sich. Im Vergleich zur Ausführungsform gemäss Fig. 3a weist das Verstärkungselement 20 in diesem Ausführungsbeispiel eine grössere Oberfläche zur Verklebung mit dem Strukturelement 12, 14 auf.

In Fig. 4b ist ein weiteres Ausführungsbeispiel mit konvergierenden Wänden 21, 22, 23 dargestellt. In diesem Ausführungsbeispiel ist die Verbindungswand 23 im Wesentlichen diagonal angeordnet. Hier ist die zweite Teilwand 21.2 der ersten Seitenwand 21 und die Verbindungswand 23 die direkt an die offene Seite angrenzenden Wände. Da sich die Verlängerungen 31, 33 dieser direkt angrenzenden Wände 21.2, 23 kreuzen, sind diese direkt angrenzenden Wände 21.2, 23 konvergierend ausgebildet.

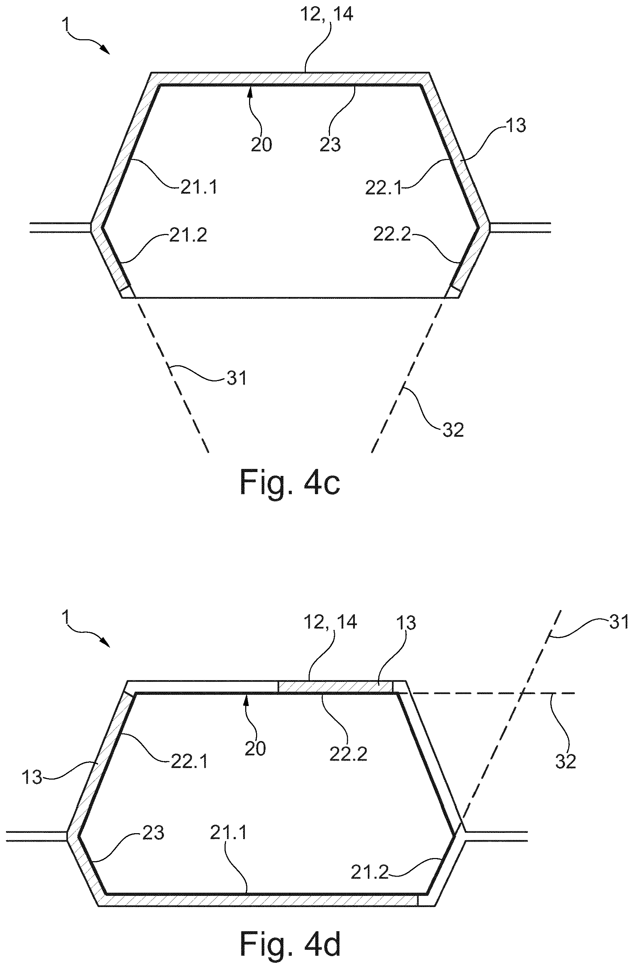

In Fig. 4c ist eine weitere Ausführungsform mit konvergierenden Wänden 21, 22, 23 dargestellt. Hier bilden die zweite Teilwand 21.2 der ersten Seitenwand 21 und die zweite Teilwand 22.2 der zweiten Seitenwand 22 die direkt an die offene Seite angrenzenden Wände. Wiederum kreuzen sich die Verlängerungen 31, 32 der entsprechenden Wände 21.2, 22.2.

In Fig. 4d ist ein weiteres Ausführungsbeispiel mit konvergierenden Wänden 21, 22, 23 dargestellt. Im Unterschied zum Ausführungsbeispiel in Fig. 4c ist hier die offene Seite des Verstärkungselementes 20 in einem anderen Bereich des Strukturelementes 12, 14 angeordnet. Wiederum kreuzen sich die Verlängerungen 31, 32 der direkt an die offene Seite angrenzenden Wände 21.2, 22.2. Somit sind auch hier die direkt an die offene Seite angrenzenden Wände 21.2, 22.2 konvergierend ausgebildet.

### Bezugszeichenliste

1 : System
3 : Hohlraum
4 : erstes Blech
5 : zweites Blech
6 : erste Fügestelle
7 : zweite Fügestelle
10 : Karosserie
12 : Strukturelement
13 : Klebstoff
14 : Strukturelement
16 : Vorrichtung
20 : Verstärkungselement
21 : erste Seitenwand
22 : zweite Seitenwand
23 : Verbindungswand
24 : Vorder-/Rückwand
26 : Längsachse
31 : Verlängerung der ersten Seitenwand
32 : Verlängerung der zweiten Seitenwand
33 : Verlängerung der Verbindungswand

## Patentansprüche

1. System (1) eines verstärkten Strukturelements in einem Kraftfahrzeug, das System umfassend:
- ein Strukturelement (12, 14);
- ein Verstärkungselement (20) mit einer Längsachse (26), wobei das Verstärkungselement (20) im Strukturelement (12, 14) angeordnet ist; und
- einen Klebstoff (13), wobei der Klebstoff (13) das Verstärkungselement (20) und das Strukturelement (12, 14) miteinander verbindet,
wobei das Verstärkungselement (20) in einem Hohlraum des Strukturelementes anordenbar ist, wobei das Verstärkungselement (20) Wände (21, 22, 23) umfasst, welche sich im Wesentlichen in Richtung der Längsachse (26) erstrecken, und wobei das Verstärkungselement (20) zumindest eine offene Seite umfasst, welche sich ebenfalls in Richtung der Längsachse (26) erstreckt,
wobei die direkt an die offene Seite angrenzenden Wände (21, 22, 23) konvergierend ausgebildet sind, indem sich Verlängerungen dieser angrenzenden Wände (21, 22, 23), in Richtung der offenen Seite und senkrecht zur Längsachse (26) verlaufend, kreuzen,
wobei das Verstärkungselement (20) durch ein dreidimensionales Druckverfahren hergestellt ist.

2. System (1) nach Anspruch 1, wobei das Verstärkungselement (20) eine erste Seitenwand (21) und eine zweite Seitenwand (22) und eine die Seitenwände (21, 22) verbindende Verbindungswand (23) hat.

3. System (1) nach Anspruch 2, wobei die erste Seitenwand (21) eine erste Teilwand (21.1) und eine zweite Teilwand (21.2) umfasst, wobei die Teilwände (21.1, 21.2) nicht in derselben Ebene liegen; und/oder wobei die zweite Seitenwand (22) eine erste Teilwand (22.1) und eine zweite Teilwand (22.2) umfasst, wobei die Teilwände (22.1, 22.2) nicht in derselben Ebene liegen.

4. System (1) nach einem der Ansprüche 2 oder 3, wobei die Verbindungswand (23) derart angeordnet ist, dass sich die Seitenwände (21, 22) auf derselben Seite der Verbindungswand (23) erstrecken.

5. System (1) nach einem der Ansprüche 2 oder 3, wobei die Verbindungswand (23) derart angeordnet ist, dass sich die Seitenwände (21, 22) auf unterschiedlichen Seiten der Verbindungswand (23) erstrecken.

6. System (1) nach einem der vorhergehenden Ansprüche, wobei ein Winkel, welcher durch die konvergierenden Verlängerungen (31, 32, 33) gebildet wird, zwischen 0° und 120° beträgt.

7. System (1) nach einem der vorhergehenden Ansprüche, wobei das Verstärkungselement (20) Rippen (17) umfasst, welche im Wesentlichen orthogonal zur Längsachse (26) des Verstärkungselementes (20) orientiert sind und welche die erste Seitenwand (21) und die zweite Seitenwand (22) miteinander verbinden.

8. System (1) nach einem der vorhergehenden Ansprüche, wobei die Wände (21, 22, 23) aus demselben Material gebildet sind.

9. System (1) nach einem der vorhergehenden Ansprüche, wobei das Verstärkungselement (20) Metall, Stahl, Aluminium, Magnesium, Kunststoff, faserverstärkter Kunststoff, Organo Sheet, oder eine Kombination dieser Materialien enthält.

10. System (1) nach einem der Ansprüche 1 bis 9, wobei der Klebstoff (13) ein nicht expandierbarer Klebstoff ist oder ein expandierbarer Klebstoff ist.

11. System (1) nach einem der Ansprüche 1 bis 10, wobei der Klebstoff zumindest die erste Seitenwand (21) und die zweite Seitenwand (22) mit dem Strukturelement (12, 14) verbindet.

12. System (1) nach einem der Ansprüche 1 bis 11, wobei der Klebstoff (13) die Verbindungswand (23) mit dem Strukturelement (12, 14) verbindet.

13. System (1) nach einem der Ansprüche 1 bis 12, wobei der Klebstoff (13) in einem Bereich einer ersten Fügestelle (6) und/oder in einem Bereich einer zweiten Fügestelle (7) des Strukturelementes (12, 14) eine kontinuierliche Schicht bildet, sodass das Verstärkungselement (20) in diesem Bereich sowohl mit einem ersten Blech (4) als auch mit einem zweiten Blech (5) verbunden ist.

14. System (1) nach einem der Ansprüche 1 bis 13, wobei in einem Querschnitt des Strukturelementes (12, 14) zumindest 50% eines inneren Umfanges des Strukturelementes (12, 14), gebildet aus dem ersten Blech (4) und dem zweiten Blech (5), durch den Klebstoff (13) mit dem Verstärkungselement (20) verbunden sind.

## Claims

1. A system (1) of a reinforced structural element in a motor vehicle, the system comprising:
- a structural element (12, 14);
- a reinforcing element (20), wherein the reinforcing element (20) is arranged in the structural element (12, 14); and
- an adhesive (13), wherein the adhesive (13) interconnects the reinforcing element (20) and the structural element (12, 14).
wherein the reinforcing element (20), which has a longitudinal axis (26) and which can be arranged in a cavity of the structural element, wherein the reinforcing element (20) comprises walls (21, 22, 23) which extend substantially in the direction of the longitudinal axis (26), and wherein the reinforcing element (20) comprises at least one open side, which likewise extends in the direction of the longitudinal axis (26),
wherein directly adjoining the open side are designed in a convergent manner in that extensions of said adjoining walls (21, 22, 23) running in the direction of the open side and perpendicularly to the longitudinal axis (26) intersect
wherein the reinforcing element (20) is produced by a three-dimensional printing process.

2. The system (1) as claimed in claim 1, wherein the reinforcing element has a first side wall (21) and a second side wall (22), and a connecting wall (23) that connects the side walls (21, 22).

3. The system (1) as claimed in claim 2, wherein the first side wall (21) comprises a first partial wall (21. 1) and a second partial wall (21.2), wherein the partial walls (21.1, 21.2) are not in the same plane; and/or
wherein the second side wall (22) comprises a first partial wall (22.1) and a second partial wall (22.2), wherein the partial walls (22.1, 22.2) are not in the same plane.

4. The system (1) as claimed in either of claims 2 and 3, wherein the connecting wall (23) is arranged in such a way that the side walls (21, 22) extend on the same side of the connecting wall (23).

5. The system (1) as claimed in either of claims 2 and 3, wherein the connecting wall (23) is arranged in such a way that the side walls (21, 22) extend on different sides of the connecting wall (23).

6. The system (1) as claimed in any of the preceding claims, wherein an angle which is formed by the converging extensions (31, 32, 33) is between 0° and 120°.

7. The system (1) as claimed in any of the preceding claims, wherein the reinforcing element (20) comprises ribs (17) which are oriented substantially orthogonally to the longitudinal axis (26) of the reinforcing element (20), and which interconnect the first side wall (21) and the second side wall (22).

8. The system (1) as claimed in any of the preceding claims, wherein the walls (21, 22, 23) are formed from the same material.

9. The system (1) as claimed in any of the preceding claims, wherein the reinforcing element (20) contains metal, steel, aluminum, magnesium, plastics material, fiberreinforced plastics material, organic sheet material, or a combination of said materials.

10. The system (1) as claimed in any of the preceding claims, wherein the adhesive (13) is a non-expandable adhesive or an expandable adhesive.

11. The system (1) as claimed in any of the preceding claims 1 to 10, wherein the adhesive connects at least the first side wall (21) and the second side wall (22) to the structural element (12, 14).

12. The system (1) as claimed in any of the preceding claims 1 to 11, wherein the adhesive (13) connects the connecting wall (23) to the structural element (12, 14).

13. The system (1) as claimed in any of the preceding claims 1 to 12, wherein the adhesive (13) in a region of a first joint (6) and/or in a region of a second joint (7) of the structural element (12, 14) forms a continuous layer such that the reinforcing element (20) in this region is connected both to a first panel sheet (4) and to a second panel sheet (5).

14. The system (1) as claimed in any of the preceding claims 1 to 13, wherein at least 50% of an inner circumference of the structural element (12, 14), formed from the first panel sheet (4) and the second panel sheet (5), in a cross section of the structural element (12, 14) is connected to the reinforcing element (20) by the adhesive (13).

## Revendications

1. Système (1) d'un élément structural renforcé dans un véhicule automobile, le système comportant :
- un élément structural (12, 14) ;
- un élément de renforcement (20) doté d'un axe longitudinal (26), l'élément de renforcement (20) étant disposé dans l'élément structural (12, 14) ; et
- un adhésif (13), l'adhésif (13) reliant l'un à l'autre l'élément de renforcement (20) et l'élément structural (12, 14),
l'élément de renforcement (20) pouvant être disposé dans une cavité de l'élément structural, l'élément de renforcement (20) comportant des parois (21, 22, 23), lesquelles s'étendent sensiblement dans la direction de l'axe longitudinal (26), et l'élément de renforcement (20) comportant au moins un côté ouvert, lequel s'étend également dans la direction de l'axe longitudinal (26),
les parois (21, 22, 23) directement adjacentes au côté ouvert étant formées de manière convergente, par le fait que des prolongements de ces parois (21, 22, 23) adjacentes se croisent, de manière à s'étendre dans la direction du côté ouvert et perpendiculairement à l'axe longitudinal (26),
l'élément de renforcement (20) étant fabriqué par un procédé de fabrication additive.

2. Système (1) selon la revendication 1, l'élément de renforcement (20) ayant une première paroi latérale (21) et une deuxième paroi latérale (22) et une paroi de liaison (23) reliant les parois latérales (21, 22).

3. Système (1) selon la revendication 2, la première paroi latérale (21) comportant une première paroi partielle (21.1) et une deuxième paroi partielle (21.2), les parois partielles (21.1, 21.2) ne se situant pas dans le même plan ; et/ou la deuxième paroi latérale (22) comportant une première paroi partielle (22.1) et une deuxième paroi partielle (22.2), les parois partielles (22.1, 22.2) ne se situant pas dans le même plan.

4. Système (1) selon l'une des revendications 2 ou 3, la paroi de liaison (23) étant disposée de telle sorte que les parois latérales (21, 22) s'étendent sur le même côté de la paroi de liaison (23).

5. Système (1) selon l'une des revendications 2 ou 3, la paroi de liaison (23) étant disposée de telle sorte que les parois latérales (21, 22) s'étendent sur des côtés différents de la paroi de liaison (23).

6. Système (1) selon l'une des revendications précédentes, un angle qui est formé par les prolongements (31, 32, 33) convergents valant entre 0° et 120°.

7. Système (1) selon l'une des revendications précédentes, l'élément de renforcement (20) comportant des nervures (17), lesquelles sont orientées sensiblement orthogonalement à l'axe longitudinal (26) de l'élément de renforcement (20) et lesquelles relient l'une à l'autre la première paroi latérale (21) et la deuxième paroi latérale (22).

8. Système (1) selon l'une des revendications précédentes, les parois (21, 22, 23) étant formées à partir du même matériau.

9. Système (1) selon l'une des revendications précédentes, l'élément de renforcement (20) contenant un métal, de l'acier, de l'aluminium, du magnésium, de la matière synthétique, de la matière synthétique renforcée par des fibres, de la tôle organique ou une combinaison de ces matériaux.

10. Système (1) selon l'une des revendications 1 à 9, l'adhésif (13) étant un adhésif non expansible ou étant un adhésif expansible.

11. Système (1) selon l'une des revendications 1 à 10, l'adhésif reliant au moins la première paroi latérale (21) et la deuxième paroi latérale (22) à l'élément structural (12, 14).

12. Système (1) selon l'une des revendications 1 à 11, l'adhésif (13) reliant la paroi de liaison (23) à l'élément structural (12, 14).

13. Système (1) selon l'une des revendications 1 à 12, l'adhésif (13) formant, dans une région d'une première jointure (6) et/ou dans une région d'une deuxième jointure (7) de l'élément structural (12, 14), une couche continue, de sorte que l'élément de renforcement (20) soit relié à la fois à une première tôle (4) et à une deuxième tôle (5) dans cette région.

14. Système (1) selon l'une des revendications 1 à 13, au moins 50% d'une circonférence intérieure de l'élément structural (12, 14), formée par la première tôle (4) et la deuxième tôle (5), étant reliés à l'élément de renforcement (20) par le biais de l'adhésif (13) dans une section transversale de l'élément structural (12, 14).
